# EUROPEAN PATENT SPECIFICATION

(11) **EP 4 225 849 B1**
(45) Date of publication and mention of the grant of the patent: **11.09.2024**
(21) Application number: 21778514.6
(22) Date of filing: 29.09.2021
(51) Int. Cl.: C09D 5/00, C09D 5/02

(54) **FIRE-PROTECTION COATING COMPOSITION AND USE THEREOF**
BRANDSCHUTZBESCHICHTUNGSZUSAMMENSETZUNG UND VERWENDUNG DAVON
COMPOSITION DE REVÊTEMENT DE PROTECTION CONTRE LES INCENDIES ET SON UTILISATION

(30) Priority: 09.10.2020 EP 20200985
(43) Date of publication of application: 16.08.2023
(73) Proprietor: Hilti Aktiengesellschaft, 9494 Schaan (LI)
(72) Inventor: FARRAS GUTIERREZ, Hector, 86507 Oberottmarshausen (DE)
(74) Representative: Hilti Aktiengesellschaft Corporate Intellectual Property
(86) International application number: PCT/EP2021/076834
(87) International publication number: WO 2022/073826

(56) References cited:
- EP-A1- 2 085 436
- WO-A1-2006/041658
- WO-A1-2010/126792
- WO-A1-2020/161733
- DE-A1- 102013 004 170
- US-A1- 2006 225 612

## Description

The present invention relates to a composition for an intumescent coating comprising a styrene-acrylate copolymer, an alkoxy-functional organic polymer, which contains an alkoxy-functional silane group, and an intumescent compound mixture.

Compositions which form an insulating layer, also referred to as intumescent compositions, are usually applied to the surface of components to form coatings, to protect said components from fire or against the effects of intense heat, for example because of a fire. Steel constructions are now an integral part of modern architecture, even though they have a decisive disadvantage in comparison with reinforced concrete construction. Above about 500°C, the load-carrying capacity of steel is considerably reduced, i.e. the steel loses its stability and its bearing capacity. A temperature which is critical for the load-bearing capacity of the structure can be reached in approximately just 5-10 minutes depending on the fire load, for example in the case of direct exposure to fire (approximately 1000 °C). It is now the aim of fire protection, in particular of steel fire protection, to extend the period of time before the steel structure loses load-bearing capacity in the event of a fire, in order to save lives and valuable property.

In the building regulations of many countries, appropriate fire resistance durations are required for certain steel structures. They are defined as so-called F-class, such as F 30, F 60, F 90 (fire resistance classes according to DIN 4102-2) or American classes according to ASTM etc. According to DIN 4102-2, for example, F 30 means that, in the event of fire under normal conditions, a supporting steel structure must withstand the fire for at least 30 minutes. This is usually achieved by delaying the heating rate of the steel, for example, by coating the steel structure with intumescent coatings. These includes coatings whose components form a solid microporous carbon foam in the event of fire. In this case, this forms a fine-pored and thick foam layer, the so-called ash crust, which, depending on the composition, is highly thermally insulating, and thus the heating of the component is delayed, so that the critical temperature of about 500°C is reached at the earliest after 30, 60, 90, 120 minutes or up to 240 minutes. The thickness of the applied coating layer, or the ash crust developing therefrom, is crucial to attaining the required fire resistance duration. Closed profiles, such as pipes with comparable solidity, require about twice the amount compared to open profiles, such as beams with a double-T profile. For the required fire resistance times to be achieved, the coating must have a certain thickness and can form a voluminous, and thus good insulating, ash crust as possible when exposed to heat and which remains mechanically stable over the period of exposure to fire.

Various systems are proposed in the prior art for this purpose. Essentially, one distinguishes between 100% systems and solvent or aqueous systems.

In the case of the solvent or aqueous systems, a binder, usually a resin, is applied as a solution, dispersion or emulsion on the component. These may be designed as single or multi-component systems. After application, the solvent or water evaporates and leaves behind a film that dries over time. In this case, one may further distinguish between systems where there are essentially no longer changes during the drying of the coating, and systems, where, after evaporation, the binder is primarily cured by oxidation and polymerization reactions which are induced, for example, by atmospheric oxygen. The 100% systems contain the components of the binder without solvents or water. They are applied to the component, and the "drying" of the coating takes place only by the reaction of the binder components to one another.

The solvent or aqueous systems have the disadvantage that the drying times, also referred to as curing, are long, while more layers also must be applied thus requiring several operations to achieve the required layer thickness. These systems have inherent maximum thickness per coat of approximately 1 to 1.5 mm dry film thickness (DFT). The speed of evaporation is slow as there is more than 25% by volume of water in the compositions applied. Since each layer must be dried appropriately before applying the next layer, this leads first to a high expenditure of labor and correspondingly high costs and a delay in the completion of the building, because the repeated applications to achieve the required thickness depend on the climatic conditions and, in some cases, can take several days. Another disadvantage is that the coating may gravitate during drying or exposure to heat, resulting in cracking and flaking of the required layer thickness, whereby the surface may be partially exposed in a worst-case scenario, particularly in systems where the binder is not cured by evaporation of the solvent or water. Wrinkling and cracking issues also occur due to film tensions on evaporation and coalescence.

To overcome this disadvantage, two or multi-component systems based on an epoxy-amine-base have been developed that require almost no solvent, so that curing is much faster and thicker layers may also be applied in one step, so that the required layer thickness is formed much faster. However, these have the disadvantage that the binder is a very stable and rigid polymer matrix with an often high softening range, which hinders the formation of foam by the foaming agent. Thus, thick layers must be applied to generate enough foam thickness for insulation. This is in turn disadvantageous in that a high amount of material is required. To implement these systems, processing temperatures of up to +70°C are often required, which makes the use of these systems laborious and expensive to implement. In addition, some of the binder components used are toxic or otherwise critical (e.g. irritant, corrosive), such as in the case of amines or amine mixtures used in the epoxy-amine systems.

Further similar systems are known. For example, DE 102013004170 A1 discloses a pulverulent coated flame retardant based on silazanes and/or silazane organosiloxane mixtures containing phosphorous and/or nitrogenous flame retardants, and its use in intumescent coatings.

Further, WO 2020/161733 A1 discloses water-based temporary protective coatings for heat treatable glass substrates provided with a functional coating. The temporary protective coating of the present disclosure is completely devoid of any organic solvents, curing agent, surfactants or photo initiators. The temporary protective coating is applied directly over a functionally coated transparent substrate to protect the coated substrate during heat treatment and handling of the coated substrate before heat treatment. The temporary protective coating is completely removed during the heat treatment leaving behind no residues thereby keeping the physical properties of the functionally coated substrate intact.

In EP 2085436 A1 a coating powder composition comprising an acrylic-styrene copolymer and glycidyl trimethoxy silane is disclosed. This composition, however, lacks a combination of a dehydrogenation catalyst, a propellant, and a carbon supplier to provide an intumescent coating.

US 2006/225612 A1 discloses a process for producing an epoxy silane oligomer from glycidoxy silane and/or cycloaliphatic epoxy silane having 2 or 3 alkoxy groups and, optionally, a copolymerizable silane, and its use in waterborne coating compositions.

WO 2006/041658 A1 discloses an encapsulated metallic-look pigment, methods to prepare, and uses thereof in thermoplastic and/or thermoset plastic compositions.

WO 2010/126792 A1 discloses compositions having low thermal conductivity and including an aerogel component, which composition can be utilized in instances similar to those requiring conventional mortar, plaster, grout and the like. In other applications, the composition, e.g., as a dry blend or slurry, can be incorporated in raw materials employed to manufacture bricks, dry wall, siding or roofing materials, tiles, ceiling tiles, paints and so forth.

None of these publications disclose a binder system comprising a silyl-terminated polymer and a co-polymer for use in intumescent coating compositions.

Thus, alternative systems have been developed, e.g. on the bases on silane-terminated polymers that cure in the presence of moisture or water.

WO 2010/131037 A1 discloses a composition, which is based on silane-terminated polyurethanes or silane-terminated polyethers as the binder, with compatible plasticizers and intumescent additives. This composition is cured by humidity. Accordingly, the curing of the composition begins at the surface. A similar composition is described, inter alia, in WO 2014/079873 A, WO 2015/189233 A1 and WO 2018/224317 A1. It is furthermore known from WO 10/054984 A1 to use a silicon-containing resin present in the composition, preferably in combination with an organic resin to provide an intumescent composition which gives a hard foam layer which may negate the use of fibers. However, this is disadvantageous in that the curing is highly dependent on the humidity and on the layer thickness, which generally leads to long curing times or, in very dry conditions, to no curing at all. Another disadvantage is that curing is highly inhomogeneous while the crosslinking density may also vary greatly.

The invention was therefore based on the task of creating an insulation-layer-forming coating system of the type stated initially, which avoids the aforementioned disadvantages, which is particularly not solvent-based or aqueous, and demonstrates fast, homogeneous curing, and requires only a slight layer thickness because of the great intumescence, i.e. the formation of an effective ash crust layer.

By use of a styrene-acrylate copolymer according to the invention, it is possible to improve the film hardness after drying of the composition and the fire performance of a composition based on pure alkoxy-functional organic polymers, which contains an alkoxy-functional silane group. Furthermore, good adhesion and bond strengths can be achieved without the use of additional crosslinkers. The inventor found out that styrene-acrylate copolymers act as crosslinkers and hardeners.

By means of the composition according to the invention, it is possible to realize improved properties of the dried film, such as no defects of the film during drying, thermal stability and bond strength without a significant effect on the curing speed. Moreover, the composition and its application are VOC free. Thus, the use of a plasticizer is not necessary, thereby eliminating the diluting effect of the plasticizer as used in WO 2010/131037 A1.

Since the styrene-acrylate copolymer acts as a crosslinker and hardener, a further advantage lies in that it is possible to apply more material in a single step to result in higher film thicknesses and temperatures compared to other aqueous formulations in one coat without negative consequences.

For a better understanding of the invention, the following explanations of the terminology used herein are considered useful. In the sense of the invention:
- *"chemical intumescence"* means the formation of a voluminous, insulating ash layer by means of compounds coordinated with one another, which react with one another when acted on by heat;
- *"insulation-layer-forming"* that in the event of a fire, a firm micro-porous carbon foam is formed, so that the fine-pore and thick foam layer that is formed, called the ash crust, insulates a substrate against heat, depending on the composition;
- a "*carbon supplier*" is an organic compound that leaves a carbon skeleton behind due to incomplete combustion, and does not combust completely to form carbon dioxide and water (carbonization); these compounds are also called *"carbon-skeleton-forming agents";*
- an *"acid-forming agent'* is a compound that forms a non-volatile acid under the effect of heat, i.e. above about 150 °C, for example by decomposition, and thereby acts as a catalyst for carbonization; furthermore, it can contribute to lowering of the viscosity of the melt of the binder; the term *"dehydrogenation catalyst"* is used as an equivalent;
- a *"propellant"* is a compound that decomposes at elevated temperature, with the development of inert, i.e. non-combustible gases, and, if applicable, expands the plasticized binder to form a foam (intumescence); this term is used as having the same meaning as "*gas-forming agent*";
- an "*ash-crust stabilizer*" is what is called a skeleton-forming compound, which stabilizes the carbon skeleton (ash crust), which is formed from the interaction of the carbon formation from the carbon source and the gas from the propellant. The fundamental method of effect in this regard is that the carbon layers that form, and are actually very soft, are mechanically solidified by inorganic compounds. The addition of such an ash-crust stabilizer contributes to significant stabilization of the intumescence crust in the event of a fire, because these additives increase the mechanical strength of the intumescent layer and/or prevent it from dripping off.

The present invention relates to a composition for an intumescent coating comprising:
(A) a binder system, comprising
   (a1) an alkoxy-functional organic polymer, which contains an alkoxy-functional silane group having the general formula (I), terminated and/or as side group along the polymer chain,

      -Si(R¹)ₘ(OR²)₃₋ₘ (I),

      in which
      R¹ represents a linear or branched C₁-C₁₆ alkyl group,
      R² represents a linear or branched C₁-C₆ alkyl group, and
      m is a whole number from 0 to 2; and
   (a2) a styrene-acrylate copolymer; and
(B) an intumescent composition comprising a combination of a dehydrogenation catalyst, a propellant and a carbon supplier.

### Binder system (A)

The composition according to the invention comprises a binder system. Said binder system contains two different binders, one of which is a reactive system, which cures upon contact with water and the other is a styrene-acrylate copolymer.

### Alkoxy-functional organic polymer (a1)

According to the invention the composition comprises, as part of the polymeric binder, an alkoxy-functional organic polymer (a1), which contain an alkoxy-functional silane group having the general formula (I), terminated and/or as side group along the polymer chain,

-Si(R¹)ₘ(OR²)₃₋ₘ (I),

in which
R¹ represents a linear or branched C₁-C₁₆ alkyl group,
R² represents a linear or branched C₁-C₆ alkyl group, and
m is a whole number from 0 to 2.

The alkoxy-functional organic polymer, which contain an alkoxy-functional silane group having the general formula (I), terminated and/or as side group along the polymer chain is herein also referred to as silane-terminated polymer.

According to the invention, the alkoxysilane-functional polymer comprises a basic skeleton that is selected from the group consisting of an alkyl chain, polyether, polyester, polyether ester, polyamide, polyurethane, polyester urethane, polyether urethane, polyether ester urethane, polyamide urethane, polyurea, polyamine, polycarbonate, polyvinyl ester, polyacrylate, polyolefin, such as polyethylene or polypropylene, polyisobutylene, polysulfide, natural rubber, neoprene, phenolic resin, epoxy resin, melamine. In this regard, the basic skeleton can have a linear or branched structure (linear basic skeleton with side chains along the chain of the basic skeleton) and contains alkoxy-functional silane groups, preferably at least two alkoxy-functional silane groups, in a terminating position, i.e. as the end groups of a linear basic skeleton or as the end groups of the linear basic skeleton and as the end groups of the side groups. Preferably, the basic skeleton consists of polypropylene glycol or polyurethane.

The alkoxy-functional silane group has the general Formula (I)

-Si(R¹)ₘ(OR²)₃₋ₘ (I),

in which R¹ stands for a linear or branched C₁-C₁₆ alkyl radical, preferably for a methyl or ethyl radical, R² stands for a linear or branched C₁-C₆ alkyl radical, preferably for a methyl or ethyl radical, and m stands for a whole number from 0 to 2, preferably 0 or 1.

Preferably, the alkoxy-functional silane group is bound to the basic skeleton by way of a group such as a further, different functional group (X = e.g. -S-, -OR, -NHR, -NR₂), which either itself can function as an electron donor or contains an atom that can function as an electron donor, wherein the two functional groups, i.e. the further functional group and the alkoxy-functional silane group are connected with one another by way of a methylene bridge or a propylene bridge (-X-CH₂-Si(R¹)ₘ(OR²)₃₋ₘ or (-X-C₃H₆-Si(R¹)ₘ(OR²)₃₋ₘ).

Most preferably, the alkoxysilane-functional polymers are polymers in which the basic skeleton is terminated by way of a urethane group with silane groups, such as, for example dimethoxy(methyl)silylmethylcarbamate-terminated polyethers and polyurethanes, dimethoxy(methyl)silylpropylcarbamate-terminated polyethers and polyurethanes, trimethoxysilylmethylcarbamate-terminated polyethers and polyurethanes, trimethoxysilylpropylcarbamate-terminated polyethers and polyurethanes or mixtures thereof.

Examples of suitable polymers comprise silane-terminated polyethers (e.g. Geniosil^{®} STP-E 10, Geniosil^{®} STP-E 15, Geniosil^{®} STP-E 30, Geniosil^{®} STP-E 35, Geniosil^{®} XB 502, Geniosil^{®} WP 1 from Wacker Chemie AG, Polymer ST61, Polymer ST75 and Polymer ST77 from Evonik Hanse), and silane-terminated polyurethanes (Desmoseal^{®} S XP 2458, Desmoseal^{®} S XP 2636, Desmoseal^{®} S XP 2749, Desmoseal^{®} S XP 2821 from Bayer, SPUR+*1050MM, SPUR+*1015LM, SPUR+* 3100HM, SPUR+* 3200HM from Momentive).

The viscosity of these alkoxysilane-functional polymers preferably lies between 0.1 and 50,000 Pa s, more preferably between 0.5 and 35,000 Pa·s, and most preferably between 0.5 and 30,000 Pa·s.

The viscosity was determined using a Kinexus rotation rheometer, by measuring a flow curve at +23 °C; the values indicated are the measured value at 215 s⁻¹.

As alternative polymers, preferably those in which the alkoxy-functional silane groups are not terminally installed into the skeleton of the polymer but rather distributed, in targeted manner, in side positions over the chain of the basic skeleton, can preferably be used. Important properties, such as the crosslinking density, can be controlled by way of the installed multiple crosslinking units. Here, the product line TEGOPAC@ from Evonik Goldschmidt GmbH can be mentioned as a suitable example, such as TEGOPAC@ BOND 150, TEGOPAC@ BOND 250 and TEGOPAC@ SEAL 100. In this connection, reference is made to DE 102008000360 A1, DE 102009028640 A1, DE102010038768 A1, and DE 102010038774 A1 as examples.

Usually, in these alkoxysilane-functional polymers, the polymer carries 2 to 8 alkoxysilane-functional silane groups per prepolymer molecule.

The degree of crosslinking of the binder and thereby both the strength of the resulting coating and its elastic properties can be adjusted as a function of the chain length of the basic skeleton, the alkoxy-functionality of the polymer, and the position of the alkoxy-functional silane groups.

### Styrene-acrylate copolymer (a2)

According to the invention, one part of the binder system is a styrene-acrylate copolymer (a2).

The styrene-acrylate copolymers refer to copolymers having the general structure shown below: 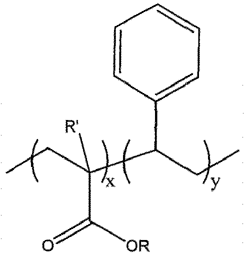 wherein x and y are independently integers from 1 to 1000, each occurrence of R' is independently hydrogen, substituted or unsubstituted alkyl, or substituted or unsubstituted aryl, and each occurrence of R is independently hydrogen, substituted or unsubstituted alkyl, or substituted or unsubstituted aryl. The copolymer can be random, block, branched, or combinations of these.

The styrene-acrylate copolymer (a2) is derivable by polymerization of a monomer mixture comprising one or more alkyl (meth)acrylate monomers and one or more optionally substituted styrene comonomers.

More particularly, the styrene-acrylate copolymer is derivable from a monomer mixture comprising greater than or equal to 30 wt.% and less than or equal to 60 wt.% of one or more alkyl (meth)acrylate comonomers and greater than or equal to 40 wt.% and less than or equal to 70 wt.% of one or more optionally substituted styrene comonomers.

Examples of styrene-acrylate copolymers include, but are not limited to, poly(styrene-co-alkyl methacrylate), such as poly(styrene-co-methyl methacrylate), poly(styrene-co-alkyl acrylate), such as poly(styrene-co-methyl acrylate), poly(styrene-co-methacrylic acid), and poly(styrene-co-acrylic acid)).

Acrylic monomers suitable for use in the present invention include any compounds having acrylic functionality. Preferred acrylic monomers are selected from the group consisting of alkyl (meth)acrylates, acrylic acids, as well as aromatic derivatives of (meth)acrylic acid. Typically, the alkyl (meth)acrylate monomers (also referred to herein as "alkyl esters of (meth)acrylic acid") will have an alkyl ester portion containing from 1 to 12, preferably 1 to 8, more preferably 1 to 5 carbon atoms per molecule, i.e. the one or more alkyl (meth)acrylate comprises one or more C₁ to C₁₂ alkyl (meth)acrylates, preferably C₁ to C₈ alkyl (meth)acrylates and more preferably C₁ to C₅ alkyl (meth)acrylates.

Suitable acrylic monomers include, for example, methyl (meth)acrylate, ethyl (meth)acrylate, butyl (meth)acrylate, propyl (meth)acrylate, 2-ethyl hexyl (meth)acrylate, cyclohexyl (meth)acrylate, decyl (meth)acrylate, isodecyl (meth)acrylate, benzyl (meth)acrylate, isobornyl (meth)acrylate, neopentyl (meth)acrylate, 1-adamatyl methacrylate and various reaction products such as butyl, phenyl, and cresyl glycidyl ethers reacted with (meth)acrylic acid, hydroxyl alkyl (meth)acrylates, such as hydroxyethyl and hydroxypropyl (meth)acrylates, as well as acrylic acids such as (meth)acrylic acid, ethacrylic acid, alpha-chloroacrylic acid, alpha-cycanoacrylic acid, crotonic acid, beta-acryloxy propionic acid, and beta-styryl acrylic acid.

In one embodiment of the invention the one or more optionally substituted styrene monomers are selected from one or more of unsubstituted styrene and C₁ to C₆ alkyl substituted styrene.

In a further embodiment of the invention the styrene-acrylate copolymer is essentially not crosslinked.

In a further embodiment of the invention the styrene acrylic copolymer has a weight averaged molecular weight of greater than or equal to 50,000 Daltons. Preferably, the styrene-acrylate copolymer has a weight averaged molecular weight of less than or equal to 200,000 Daltons.

The styrene-acrylate copolymer can be used as a solid compound or in the form of a dispersion in a suitable solvent.

Suitable solvents include non-polar solvents such as xylene or toluene, whereas toluene is preferred, and high boiling point solvents of moderate polarity such as butyl acetate or dimethyl carbonate. The latter only to be used in combination with non-polar to reduce VOC levels.

Examples of suitable and commercially available styrene-acrylate copolymers comprise NeoCryl^{®} B-723, NeoCryl^{®} B-725, NeoCryl^{®} B-775, NeoCryl^{®} B-826, NeoCryl^{®} B864, NeoCryl^{®} B-875, NeoCryl^{®} B-880, NeoCryl^{®} B-885, NeoCryl^{®} B-888, NeoCryl^{®} B890, NeoCryl^{®} B-891 by DSM Coating Resins B.V. and PLIOLITE^{®} AC80, PLIOLITE^{®} AC5G by OMNOVA Solutions Inc..

The total amount of the polymeric compounds, that is, the amount of the polymeric compounds resulting from the alkoxy-functional polymer and the styrene-acrylate copolymer usually is 10 to 40 wt.-%, preferably 15 to 25 wt.-%, with reference to the total weight of the composition.

In this context, the ratio of the alkoxy-functional organic polymer to the styrene-acrylate copolymer is 0.1:1 to 10:1, preferable 0.75:1 to 5.1:1.

The amount of the polymer resulting from the alkoxy-functional polymer is 7 to 25 wt.-%, preferably 10 to 16 wt.-%, with reference to the total weight of the composition.

In this context, the amount of the copolymer resulting from the styrene-acrylate copolymer is 3 to 15 wt.-%, preferably 4 to 9 wt.-%, with reference to the total weight of the whole composition.

To avoid reaction between the styrene-acrylate copolymer, other fillers such as pentaerythritol and the alkoxy-functional organic polymer, the styrene-acrylate copolymer and the alkoxy-functional organic polymer is preferably stored separately. This means that both components are packed separately, e.g. in a two- or multi-component packaging, preferably in a two-component packaging.

In a preferred embodiment of the two-component packaging,
- the amount of the polymer in the component, which contains the alkoxy-functional polymer, is 10 to 100 wt.-%, preferably 70 to 100 wt.-%, with reference to the total weight of the component containing the alkoxy-functional polymer,
- the amount of the copolymer in the component, which contains the styrene-acrylate copolymer, is 4 to 20 wt.-%, preferably 7 to 14 wt.-%, with reference to the total weight of the component containing the styrene-acrylate copolymer.

In said two-component packaging the weight ratio between the component containing the styrene-acrylate copolymer to the component containing the alkoxy-functional polymer is from 1:1 to 20:1 preferably 5:1 to 10:1.

### Intumescent composition (B)

According to the invention, the composition contains an intumescent composition, wherein the composition comprises a mixture of multiple compounds, i.e. a dehydrogenation catalyst, a propellant and a carbon supplier.

It is practical if, as an intumescent composition, a compound is used that acts by means of the formation of an expanded insulating layer that forms under the effect of heat, composed of a material with low flammability, which protects the substrate from overheating and thereby prevents or at least delays a change in the mechanical and static properties of supporting structural parts. The formation of a voluminous insulating layer, namely an ash layer, can be formed by means of the chemical reaction of a mixture of corresponding compounds, coordinated with one another, which react with one another under the effect of heat. Such systems are known to a person skilled in the art by the term chemical intumescence and can be used according to the invention.

For the formation of an intumescent layer by means of chemical intumescence, at least three components are generally required, a carbon supplier, a dehydrogenation catalyst, and a propellant (also known as gas-forming agent), which are contained in a binder in the case of coatings, for example. Under the effect of heat, the binder plasticizes, and the compounds are released is released, so that they react with one another, in the case of chemical intumescence. The acid that serves as the catalyst for carbonization of the carbon supplier is formed from the dehydrogenation catalyst, by means of thermal decomposition. At the same time, the propellant decomposes, forming inert gases that brings about expansion of the carbonized (charred) material and, if applicable, the plasticized binder, causing the formation of a voluminous, insulating foam.

According to the invention the insulation-layer-forming additive comprises at least one carbon-skeleton-forming agent, at least one acid-forming agent, at least one propellant, and optionally at least one inorganic skeleton-forming agent.

Optionally, to increase the stability of the ash-crust, the intumescent composition can contain additionally at least one inorganic skeleton-forming agent.

The components of the intumescent composition are particularly selected in such a manner that they can develop synergy, wherein some of the compounds can fulfill multiple functions.

Compounds usually used in intumescent fire-protection agents and known to a person skilled in the art are possible carbon suppliers, such as compounds similar to starch, for example starch and modified starch, and/or multivalent alcohols (polyols), such as saccharides and polysaccharides and/or a thermoplastic or duroplastic polymer resin binder, such as a phenolic resin, a urea resin, a polyurethane, polyvinyl chloride, poly(meth)acrylate, polyvinyl acetate, polyvinyl alcohol, a silicone resin and/or a natural rubber. Suitable polyols are polyols from the group of sugar, pentaerythrite, dipentaerythrite, tripentaerythrite, polyvinyl acetate, polyvinyl alcohol, sorbitol, EO-PO-polyols. Preferably, pentaerythrite, dipentaerythrite or polyvinyl acetate are used.

It should be mentioned that in the event of a fire, the binder itself can also have the function of a carbon supplier.

Compounds usually used in intumescent fire-protection formulations and known to a person skilled in the art are possible dehydrogenation catalysts or acid-forming agents, such as a salt or an ester of an inorganic, non-volatile acid, selected from among sulfuric acid, phosphoric acid or boric acid. Essentially, compounds containing phosphorus are used; their palette is very large, because they extend over multiple oxidation stages of phosphorus, such as phosphines, phosphine oxides, phosphonium compounds, phosphates, elemental red phosphorus, phosphites, and phosphates. The following examples of phosphoric acid compounds can be mentioned: mono-ammonium phosphate, di-ammonium phosphate, ammonium phosphate, ammonium polyphosphate, melamine phosphate, melamine resin phosphate, potassium phosphate, polyol phosphates such as pentaerythrite phosphate, glycerin phosphate, sorbite phosphate, mannite phosphate, dulcite phosphate, neopentyl glycol phosphate, ethylene glycol phosphate, dipentaerythrite phosphate, and the like. Preferably, a polyphosphate or an ammonium polyphosphate is used as a phosphoric acid compound. In this regard, melamine resin phosphates are understood to be compounds such as the reaction products of Lamelite C (melamine/formaldehyde resin) with phosphoric acid. The following examples of sulfuric acid compounds can be mentioned: ammonium sulfate, ammonium sulfamate, nitroaniline bisulfate, 4-nitroaniline-2-sulfonic acid and 4,4-dinitrosulfanilamide and the like. Melamine borate can be mentioned as an example of a boric acid compound.

Possible propellants are the compounds usually used in fire-protection agents and known to a person skilled in the art, such as cyanuric acid or isocyanic acid and their derivatives, melamine and its derivatives. Such compounds are cyanamide, dicyanamide, dicyandiamide, guanidine and its salts, biguanide, melamine cyanurate, cyanic acid salts, cyanic acid esters and amide, hexamethoxymethyl melamine, dimelamine pyrophosphate, melamine polyphosphate, melamine phosphate. Preferably, hexamethoxymethyl melamine or melamine (cyanuric acid amide) is used.

Furthermore, components that do not restrict their method of action to a single function, such as melamine polyphosphate, which acts both as an acid-forming agent and as a propellant, are suitable. Further examples are described in GB 2 007 689 A1, EP 139 401 A1, and US 3,969,291 A1.

Although the ash-crust formed in the event of a fire is generally stable so that no additional additive such as an ash-crust stabilizer is necessary, at least one ash-crust stabilizer can be added to the components to further enhance the ash crust stability.

The compounds usually used in fire-protection formulations and known to a person skilled in the art are usually considered as ash-crust stabilizers or skeleton-forming agents, for example expanded graphite and particulate metals, such as aluminum, magnesium, iron, and zinc. The particulate metal can be present in the form of a powder, of lamellae, scales, fibers, threads and/or whiskers, wherein the particulate metal in the form of powder, lamellae or scales possesses a particle size of ≤50 µm, preferably of 0.5 to 10 µm. In the case of use of the particulate metal in the form of fibers, threads and/or whiskers, a thickness of 0.5 to 10 µm and a length of 10 to 50 µm are preferred. Alternatively or additionally, an oxide or a compound of a metal from the group comprising aluminum, magnesium, iron or zinc can be used as an ash-crust stabilizer, particularly iron oxide, preferably iron trioxide, titanium dioxide, a borate, such as zinc borate and/or a glass frit composed of glass types having a low melting point, with a melting temperature of preferably at or above 400 °C, phosphate or sulfate glass types, melamine poly-zinc-sulfates, ferroglass types or calcium boron silicates. The addition of such an ash-crust stabilizer contributes to significant stabilization of the ash crust in the event of a fire, since these additives increase the mechanical strength of the intumescent layer and/or prevent it from dripping off. Examples of such additives are also found in US 4,442,157 A, US 3,562,197 A, GB 755 551 A, as well as EP 138 546 A1.

In addition, ash-crust stabilizers such as melamine phosphate or melamine borate can be contained.

The intumescent composition can be contained in the composition in an amount of 20 to 99 wt.-%, with reference to the total composition, wherein the amount essentially depends on the application form of the composition (spraying, brushing, and the like). To bring about the highest possible intumescence rate, the proportion of the intumescent composition in the total formulation is set to be as high as possible. Preferably, its proportion in the total formulation amounts to 35 to 85 wt.-%, and particularly preferably 40 to 85 wt.-%.

### Further compounds

### Catalyst

In a preferred embodiment, the composition contains at least one catalyst for the curing of the silane-terminated polymer. All compounds that are suitable for catalyzing the formation of the Si-O-Si-bonds between the silane groups of the polymers can be used as catalysts. As examples, metal compounds, such as titanium compounds, tin compounds can be mentioned. Alternatively, acidic or basic catalysts can be mentioned.

Among the titanium compounds, titanate esters are preferred, such as tetrabutyltitanate, tetrapropyltitanate, tetraisopropyltitanate, tetraacetylacetonate-titanate.

Among the metal compounds as catalysts, organo-aluminum compounds or reaction products of bismuth salts or chelate compounds, such as zirconium tetracetylacetonate, can be mentioned.

Among the tin compounds, dibutyl tin dilaurate, dibutyl tin maleate, dibutyl tin diacetate, dibutyl tin dioctanoate, dibutyl tin acetylacetonate, dibutyl tin oxide, or corresponding compounds of dioctyl tin, tin naphthenate, dimethyl tin dineododecanoate, reaction products of dibutyl tin oxide, and phthalic acid esters are preferred.

Since some of these catalysts are problematical regarding their toxicity, catalysts that do not contain metals, such as acidic or basic catalysts, are preferred.

Phosphoric acid or phosphoric acid esters, toluene sulfonic acids, and mineral acids can be mentioned as examples of acidic catalysts.

Solutions of simple bases such as NaOH, KOH, K₂CO₃, ammonia, Na₂CO₃, aliphatic alcoholates or K-phenolate can be mentioned as examples of basic catalysts.

Particularly preferably, the catalyst is selected from among the group of organic amines, such as triethylamine, tributylamine, trioctylamine, monoethanolamine, diethanolamine, triethanolamine, triisopropanolamine, tetramethylene diamine, Quadrol, diethylene triamine, dimethylaniline, Proton Sponge, *N*,*N*'-bis[2-(dimethylamino)ethyl]-*N*,*N*'-dimethylethylene diamine, N,N-dimethylcyclohexylamine, N-dimethylphenlyamine, 2-methylpentamethylene diamine, 2-methylpentamethylene diamine, 1,1,3,3-tetramethylguanidine, 1,3-diphenylguanidine, benzamidine, N-ethylmorpholine, 2,4,6-tris(dimethylaminomethyl)phenol (TDMAMP); 1,8-diazabicyclo[5.4.0]undec-7-ene (DBU), and 1,5-diazabicyclo(4.3.0)non-5-ene (DBN); n-pentylamine, n-hexylamine, di-n-propylamine, and ethylene diamine; DABCO, DMAP, PMDETA, imidazol and 1-methylimidazol or salts of amines and carboxylic acids, and polyetheramines, such as polyethermonoamines, polyetherdiamines or polyethertriamines, such as, for example, the Jeffamines of Huntsman and ether amines, such as, for example, the Jeffkats of Huntsman. In this regard, reference is made to the patent applications WO 2011/157562 A1 and WO 2013/003053 A1.

The type and the amount of the catalyst are selected as a function of the selected alkoxysilane-functional polymer and the desired reactivity.

### Additives

In a further embodiment, the composition according to the invention furthermore contains at least one further constituent, selected from among water scavengers, organic and/or inorganic admixtures and/or further additives.

To prevent a premature reaction with residual moisture of the fillers used or of the humidity in the air, water scavengers are usually added to the composition. Preferably, the water scavenger is an organo-functional alkoxysilane or an oligomer organo-functional alkoxysilane, more preferably a vinyl-functional silane, an oligomer vinyl-functional silane, a vinyl-/alkyl-functional silane, an oligomer amino-/alkyl-functional silane, an acetoxy-/alkyl-functional silane, an amino-functional silane, an oligomer amino-functional silane, a carbamatosilane or a methacryloxy-functional silane. Most preferably, the water scavenger is di-tert-butoxydiacetoxysilane, bis(3-triethoxysilylpropyl)amine, bis(3-trimethoxypropyl)amine, 3-aminopropylmethyldiethoxysilane, 3-aminopropyltriethoxysilane, vinyl triethoxysilane, vinyl trimethoxysilane, vinyl tris(2-methoxyethoxy)silane, N-cyclohexylaminomethyl triethoxysilane, vinyldimethoxymethyl silane, vinyltriacetoxysilane, 3-methacryloxypropyl trimethoxysilane, methacryloxymethyl-methyldimethoxysilane, methacryloxymethyl trimethoxysilane, 3-methacryloxypropyl triacetoxysilane, N-methyl[3-(trimethoxysilyl)propyl]carbamate, *N*-trimethoxysilylmethyl-*O*-methylcarbamate, *N-*dimethoxy(methyl)silyl-methyl-O-methylcarbamate or combinations thereof.

Examples of this are Dynasylan^{®} 1146, Dynasylan^{®} 6490, Dynasylan^{®} 6498, Dynasylan^{®} BDAC, Dynasylan^{®} 1122, Dynasylan^{®} 1124, Dynasylan^{®} 1133, Dynasylan^{®} 1204, Dynasylan^{®} 1505, Dynasylan^{®} 1506, Dynasylan^{®} AMEO, Dynasylan^{®} AMEO-T, Dynasylan^{®} VTEO, Dynasylan^{®} VTMO, Dynasylan^{®} VTMOEO, Dynasylan^{®} 6598 (Evonik), Geniosil^{®} XL 926, Geniosil^{®} XL 10, Geniosil^{®} XL 12, Geniosil^{®} GF 56, Geniosil^{®} GF 62, Geniosil^{®} GF 31, Geniosil^{®} XL 32, Geniosil^{®} XL 33, Geniosil^{®} GF 39, Geniosil^{®} GF 60, Geniosil^{®} XL 63, and Geniosil^{®} XL 65 (Wacker).

These water scavengers are preferably contained in an amount of 0 to 5 wt.-%, with reference to the total composition, more preferably of 0.5 to 4 wt.-%, and most preferably of 0.7 to 3 wt.-%.

Optionally, one or more reactive flame inhibitors can be added to the composition according to the invention as further additives. Such compounds are built into the binder. Examples in the sense of the invention are reactive organophosphorus compounds, such as 9,10-dihydro-9-oxa-10-phosphaphene-anthrene-10-oxide (DOPO) and its derivatives, such as, for example, DOPO-HQ, DOPO-NQ, and adducts.

Additional additives, such as thickeners and/or rheology additives, as well as fillers, can be added to the composition. Preferably, polyhydroxycarboxylic acid amides, urea derivatives, salts of unsaturated carboxylic acid esters, alkylammonium salts of acidic phosphoric acid derivatives, ketoximes, amine salts of p-toluene sulfonic acid, amine salts of sulfonic acid derivatives, as well as aqueous or organic solutions or mixtures of the compounds are used as rheology additives, such as anti-settling agents, anti-runoff agents, and thixotropic agents. In addition, rheology additives based on pyrogenic or precipitated silicic acids or based on silanated pyrogenic or precipitated silicic acids can be used. Preferably, the rheology additives are pyrogenic silicic acids, modified and non-modified sheet silicates, precipitation silicic acids, cellulose ethers, polysaccharides, PU and acrylate thickeners, urea derivatives, castor oil derivatives, polyamides and fatty acid amides and polyolefins, if they are present in solid form, powdered celluloses and/or suspension agents such as xanthan gum, for example.

Aside from the additives already described, the composition can contain usual aids such as wetting agents, for example based on polyacrylates and/or polyphosphates, defoamers, such as silicone defoamers, pigments, fungicides, or diverse fillers, such as vermiculite, inorganic fibers, quarts sand, micro-glass beads, mica, silicon dioxide, mineral wool, and the like, if necessary.

The composition according to the invention can be packaged as a single-component or multi-component system. Preferably, the composition is packed as a two-component or multi-component system to avoid reaction of the styrene-acrylate copolymer with the alkoxy-functional polymer before use of the composition.

When packed as a two-component or multi-component system, the further constituents of the composition are divided up in accordance with their compatibility with one another and with the compounds contained in the composition and can be contained in one of the two components or in both components.

Furthermore, the division of the further constituents, particularly of the solid constituents, can depend on the amounts in which these are supposed to be contained in the composition. By means of a corresponding division, a higher proportion, with reference to the total composition, can occur in some cases.

It is also possible that a component contains merely the styrene-acrylate copolymer.

Alternatively, the styrene-acrylate copolymer can be contained in a component of the two-component system together with other constituents, such as additives and/or fillers.

In this regard, the intumescent composition can be contained as a total mixture or, divided up into individual components, in one component or multiple components. The division of the fire-protection additive takes place as a function of the compatibility of the compounds contained in the composition, so that neither a reaction of the compounds contained in the composition with one another or reciprocal disruption, nor a reaction of these compounds with the compounds of the other constituents can take place. This is dependent on the compounds used.

It is preferred if the intumescent composition contains a carbon supplier, a propellant, and a dehydrogenation catalyst, the carbon supplier, the propellant, and the dehydrogenation catalyst are separated from the alkoxysilane-functional polymer and the crosslinking agent to inhibit a reaction. But it is also possible that only the carbon supplier is separated from the alkoxysilane-functional polymer and the crosslinking agent, this means that the propellant, the dehydrogenation catalyst and the alkoxysilane-functional polymer can be contained in one component. In this way, it is ensured that the highest possible proportion of fillers can be achieved. This leads to high intumescence, even at low layer thicknesses of the composition.

If the composition furthermore contains an additional ash-crust stabilizer, the latter can be contained in one of the two components of the two-component system. Alternatively, the ash-crust stabilizer can also be divided up among the two components. Accordingly, the ash-crust stabilizer is divided up among the first component and the second component in such a manner that the first component or the second component contains at least a part of the ash-crust stabilizer, and the second component or the first component contains a further part of the ash-crust stabilizer, if applicable.

The composition is applied to the substrate, particularly metallic substrate, as a paste, using a brush, a roller or by means of spraying. Preferably, the composition is applied by means of an airless spraying method.

The composition according to the invention is characterized by a good fire performance, pull off strength (or bond strength) and a high temperature aspect, i.e. an improved char stability, compared to a formulation only based on alkoxy-functional organic polymers, in particular alkoxy-silane functional polymers.

For this reason, the two-component or multi-component composition according to the invention is suitable as a coating, particularly a fire-protection coating, preferably a sprayable coating for substrates on a metallic and non-metallic basis. The substrates are not restricted and comprise structural parts, particularly steel structural parts and wooden structural parts, but also individual cables, cable bundles, cable runs, and cable ducts or other lines.

The composition according to the invention is used, above all, in the construction sector, as a coating, particularly a fire-protection coating for steel construction elements, but also for construction elements composed of other materials, such as concrete or wood, and as a fire-protection coating for individual cables, cable bundles, cable runs, and cable ducts or other lines.

A further object of the invention is therefore the use of the composition according to the invention as a coating, particularly as a coating for construction elements or structural elements composed of steel, concrete, wood, and other materials, such as plastics, particularly as a fire-protection coating.

The present invention also relates to objects that are obtained when the composition according to the invention has cured. The objects have excellent insulation-layer-forming properties.

The following examples serve for a further explanation of the invention.

### EXEMPLARY EMBODIMENTS

### Compounds used in the examples:

| **Compound** | **Trade Name** | **Supplier** |
|---|---|---|
| Dimethoxy(methyl)silylmethylcarbamate-terminated polyether (a-silane) (abbreviated as MS-Copolymer) | GENIOSIL^{®} STP- E10 | Wacker Chemie AG |
| 3-Aminopropyltrimethoxysilane (abbreviated as MS-Crosslinker 1) | Dynasylan^{®} AMMO | Evonik Industries AG |
| 1,2-Cyclohexane dicarboxylic acid diisononyl ester (abbreviated as plasticizer) | Hexamoll^{®} DINCH | BASF SE |
| Solid styrene-acrylate copolymer 1 | NeoCryl^{®} B-880 | DSM Coating Resins B.V. |
| (IBMA/styrene copolymer; average mol weight 90.000; Viscosity Brookfield 25°C 40 w/w in toluene 350-550 mPas; density 20°C 1.05 kg/l; free monomer max. 2000 ppm; Tg (DSC) 52°C; softening point 135°C, acid value (on solid) 4 mgKOH/g)- abbreviated as styrene-acrylate copolymer 1 | | |
| Solid styrene-acrylate copolymer 2 (Tg Onset 53°C; Cup Viscosity 45 sec (Ford Cup #4 @ 25°C, 33% xylene; Density 8.6 Ib/gal; specific Gravity 1.03) - abbreviated as styrene-acrylate copolymer 2 | PLIOLITE^{®} AC80 | OMNOVA Solutions Inc. |
| Xylene | | |
| Mineral fibers | Roxul^{®} 1000 Rockforce MS675 | ROCKWOOL B.V. |
| Titanium dioxide | KRONOS^{®} 2056 | Kronos Incorporated |
| Melamine | Melafine^{®} | OCI N.V. |
| Pentaerythritol | Charmor^{™} PM40 | Perstorp AB |
| Ammonium polyphosphate | Exolit^{®} AP 422 | Clariant AG |
| China Clay | Polwhite^{™} E | Imerys S.A. |
| Powdered rheology additive based on organophilic phyllosilicates (abbreviated as Garamite) | Garamite-1958 | BYK |

### Comparative Examples

### Comparative Example 1

Comparative Example 1 is based on example 2 of WO 2010/131037 A1, however, without additives and plasticizer to better show the inventive effect. The formulation is based on an alkoxysilane-based polymer as the only polymer. The weight lost by the omission of plasticizers and additives is compensated by the silane-terminated prepolymer/crosslinker blend so that the end film has the same filling content. The formulation of Comparative Example 1 is shown in Table 1.

### Comparative Example 2

Based on Comparative Example 1 a formulation with one plasticizer was prepared. The formulation of Comparative Example 2 is also shown in Table 1.

### Comparative Example 3

Also based on Comparative Example 1 a formulation with one plasticizer but without a crosslinker was prepared. The formulation of Comparative Example 3 is also shown in Table 1.

### Comparative Example 4

Also based on Comparative Example 1 a formulation but without a crosslinker and without a plasticizer was prepared. The formulation of Comparative Example 4 is also shown in Table 1.

### Examples 1 to 6

To show the positive influence of the styrene-acrylate copolymer added to a crosslinker-free and plasticizer-free MS-Copolymer based formulation the formulation of Comparative Example 3 was selected as the base formulation. The plasticizer was replaced by different amounts of styrene-acrylate copolymer as shown in Table 1 (Examples 1 to 5). To show that alternative styrene-acrylate copolymers can be used, the styrene-acrylate copolymer of Example 5 was replaced by a different one (Example 6).

Specimen were prepared from all Comparative Example 1 to 4 formulations and from Example 1 to 6 formulations and the following coating properties and fire performance were determined:

### Coating properties:

- Shore D hardness after 1 week at 45°C
- Film aspect after 1 week at 45°C (1.5mm WFT)
- Bond strength (pull off adhesion test)

The Shore D hardness was determined with specimen by letting specimen (draw down panels) at 1.5mm wet film thickness (WFT) dry for one week at 45°C, whereas the hardness of the hardened mass was the depth of penetration of a spring-loaded pin in the material with a Shore durometer (DIN-ISO 7619). The Shore D hardness is measured with a rod that has a tip with a conical point having a radius of 0.1 mm and an opening angle of 30 degrees; the applied mass is 5 kg and the holding time is 15 seconds. The results are shown in table 2.

The flat surface aspect or film aspect was determined applying a coat of 1.5mm WFT (1mm DFT approximately) over a primed steel panel and leaving it drying over a period of 1 week (seven days) at 45°C. The results are also shown in Table 2.

Pull off adhesion tests to evaluate the bond strength were carried out following ISO 4624. The test determines the greatest perpendicular force (in tension) that a surface area can bear before a plug of material is detached. Failure will occur along the weakest plane within the system comprised of the test, that is adhesive, intumescent coating, primer and steel substrate, and will be exposed by the fracture surface. Four failure modes can occur: (1) adhesive failure between primer and steel, (2) adhesive failure between primer and intumescent coating, (3) cohesive failure of the intumescent coating, i.e. failure happens within the intumescent coating, (4) adhesive failure between intumescent coating and plug. The breaking of the system by the pull off adhesion test tends to be not 100% of one failure mode, but often is a mixture or combination of two failure modes, whereas the percentage indicates the degree of each failure mode. The results of the pull off adhesion test, i.e. the achieved load to failure, and the results of a visual assessment of the failure mode are shown in Table 3.

### Panel fire performance properties:

- Time to failure (Table 4)
- Char properties (Table 5)

Time to failure (TTF): For the fire performance evaluation a primed and grit blasted carbon steel panel (5mm thickness; 280mm width; 280mm width) was coated at 2 mm dry film thickness (DFT) with the intumescent coatings according to comparative Examples 1 to 4 and Examples 1 to 6 shown in Table 1. It is let to dry and cure for at least two weeks at ambient temperature. The fire test is carried out in a gas fuelled furnace following the ISO 834 fire curve and the temperature at the core of the steel panel is monitored by three thermocouples type K. The time to failure is the time for the carbon steel panel to reach an average temperature of 538°C, also abbreviated as TTF538. The results are shown in Table 4.

Char properties: Once the panel reaches 538°C average temperature the furnace is stopped and cooled down to room temperature as quickly as possible using ventilation. Once the panel reached room temperature its char is analysed by visual inspection to find the characteristics of its expansion. The results of the inspection are also shown in Table 4.

**Table 1: Formulations of Comparative Examples 1 to 4 and Examples 1 to 6**

| | **Comparative Example 1** | **Comparative Example 2** | **Comparative Example 3** | **Comparative Example 4** | **Example 1** | **Example 2** | **Example 3** | **Example 4** | **Example 5** | **Example 6** |
|---|---|---|---|---|---|---|---|---|---|---|
| **Compound** | **wt. %** | | | | | | | | | |
| | | | | | | | | | | |
| MS-Copolymer | 20.18 | 8.25 | 9.20 | 21, 13 | 9.20 | 14.69 | 17.69 | 12.68 | 15.85 | 14.69 |
| MS-Crosslinker | 0.95 | 0.95 | - | - | - | - | - | - | - | - |
| Plasticizer | - | 11.93 | 11.93 | - | - | - | - | - | - | - |
| **Styrene-acrylate copolymer 1** | - | - | - | - | **11.93** | **6.44** | **3.44** | **8.45** | **5.28** | **-** |
| **Styrene-acrylate copolymer 2** | - | - | - | - | - | **-** | **-** | **-** | **-** | **6.44** |
| Xylene | 16.59 | 16.59 | 16.59 | 16.59 | 16.59 | 16.59 | 16.59 | 16.59 | 16.59 | 16.59 |
| Mineral fibers | 0.92 | 0.92 | 0.92 | 0.92 | 0.92 | 0.92 | 0.92 | 0.92 | 0.92 | 0.92 |
| Titanium dioxide | 10.58 | 10.58 | 10.58 | 10.58 | 10.58 | 10.58 | 10.58 | 10.58 | 10.58 | 10.58 |
| Melamine | 9.31 | 9.31 | 9.31 | 9.31 | 9.31 | 9.31 | 9.31 | 9.31 | 9.31 | 9.31 |
| Pentaerythritol | 9.31 | 9.31 | 9.31 | 9.31 | 9.31 | 9.31 | 9.31 | 9.31 | 9.31 | 9.31 |
| Ammonium polyphosphate | 28.37 | 28.37 | 28.37 | 28.37 | 28.37 | 28.37 | 28.37 | 28.37 | 28.37 | 28.37 |
| China Clay | 2.12 | 2.12 | 2.12 | 2.12 | 2.12 | 2.12 | 2.12 | 2.12 | 2.12 | 2.12 |
| Garamite | 1.67 | 1.67 | 1.67 | 1.67 | 1.67 | 1.67 | 1.67 | 1.67 | 1.67 | 1.67 |

**Table 2: Results of the Shore D measurement and results of the assessment of the film aspect**

| **Example** | **Shore D [Shore]** | **Aspect** |
|---|---|---|
| Comparative Example 1 | 45 | smooth |
| Comparative Example 2 | 25 | slight cracking |
| Comparative Example 3 | 0 | wet |
| Comparative Example 4 | 0 | dry surface dry, not cured with slight cracking surface cracks |
| Example 1 | 63 | smooth |
| Example 2 | 45 | smooth |
| Example 3 | 45 | smooth |
| Example 4 | 55 | smooth |
| Example 5 | 52 | smooth |
| Example 6 | 45 | smooth |

The results in Table 2 show that the hardness of the dried film increases when an acrylic/styrene co-polymer instead of a plasticizer or crosslinker is used with the MS polymer system. The results lead to the conclusion that the styrene-acrylate copolymer acts as hardener like a crosslinker, also having a positive impact on the film formation.

**Table 3: Results of the bond strength measurement**

| **Example** | **Bond strength (MPa)** | **Failure mode** |
|---|---|---|
| Comparative Example 1 | 1,86 | 100% cohesive failure within intumescent coating |
| Comparative Example 2 | 0,68 | 80% cohesive failure within intumescent coating; 20% adhesive failure between primer and intumescent coating |
| Comparative Example 3 | 0 | predominantly adhesive failure between primer and intumescent coating |
| Comparative Example 4 | 0 | adhesive failure, coating is only surface dry. |
| Example 1 | 0,79 | 80% adhesive failure between primer and intumescent coating; 20% cohesive failure within intumescent coating |
| Example 2 | 1,9 | 100% cohesive failure within intumescent coating |
| Example 3 | 0,5 | 100% cohesive failure within intumescent coating |
| Example 4 | 4,6 | 70% adhesive failure between primer and intumescent coating; 30% cohesive failure within intumescent coating |
| Example 5 | 4,2 | 100% cohesive failure within intumescent coating |
| Example 6 | 2,7 | 100% cohesive failure within intumescent coating |

The results in Table 3 show that the crosslinker-free formulation of comparative Example 3 did not allow the MS prepolymer to cure resulting in a negligible result. The high concentration of plasticizer in the formulation of Comparative Example 2 resulted in a decrease of bond strength. The results of Examples 1 to 6 show that the use of a styrene-acrylate copolymer in conjunction with an MS prepolymer provided curing and an average level of bond strength which can get as high as with the use of a crosslinker.

**Table 4: Results of the time to failure (TTF538) measurement and results of the assessment of the char properties**

| **Example** | **TTF538 (min)** | **Char properties** |
|---|---|---|
| Comparative Example 1 | 23,9 | Partial char detachment |
| Comparative Example 2 | 21,6 | Partial char detachment |
| Comparative Example 3 | 31.9 | Coating was partially detached before fire test and the char detached during the fire test. |
| Comparative Example 4 | 85.8 | Nodular char, compact and cohesive |
| Example 1 | 71,6 | Cohesive char |
| Example 2 | 86,1 | Very cohesive char |
| Example 3 | 89 | High expansion rate and cohesive |
| Example 4 | 79,4 | Controlled expansion and cohesive |
| Example 5 | 68,7 | Nodular and slightly cracked surface but cohesive |
| Example 6 | 77,3 | Compact and even expanded char with high cohesivity |

According to the results shown in Table 4, the fire performance of the comparative examples was extremely poor due to char detachments from substrate. Contrary thereto, the formulations comprising the styrene-acrylate copolymer (Examples 1 to 6) show a significant improvement in the fire performance properties, in that the time to failure is prolonged which leads to longer insulation times, and the char properties are better.

## Claims

1. A fire-protection composition for an intumescent coating comprising:
(A) a binder system, comprising
(a1) an alkoxy-functional organic polymer, which contains an alkoxy-functional silane group having the general formula (I), terminated and/or as side group along the polymer chain,
-Si(R¹)ₘ(OR²)₃₋ₘ (I),
in which
R¹ represents a linear or branched C₁-C₁₆ alkyl group,
R² represents a linear or branched C₁-C₆ alkyl group, and
m is a whole number from 0 to 2; and
(a2) a styrene-acrylate copolymer; and
(B) an intumescent composition, comprising a combination of a dehydrogenation catalyst, a propellant and a carbon supplier.

2. The fire-protection composition according to claim 1, wherein the alkoxy-functional organic polymer (a1) comprises a basic skeleton, which is at least one member selected from the group consisting of an alkyl chain, a polyether, polyester, polyether ester, polyamide, polyurethane, polyester urethane, polyether urethane, polyether ester urethane, polyamide urethane, polyurea, polyamine, polycarbonate, polyvinyl ester, polyacrylate, polyolefin, polyisobutylene, polysulfide, natural rubber, neoprene, phenolic resin, epoxy resin, and melamine.

3. The fire-protection composition according to claim 2, wherein the basic skeleton is a polyether or a polyurethane.

4. The fire-protection composition according to any one of the preceding claims, wherein the alkoxysilane-functional polymer (a1) contains at least 2 alkoxy-functional silane groups.

5. The fire protection composition according to any of the preceding claims, wherein the styrene-acrylate copolymer is derivable by polymerization of a monomer mixture comprising one or more alkyl (meth)acrylate monomers and one or more optionally substituted styrene comonomers.

6. The fire protection composition according to any of the preceding claims, wherein the styrene-acrylate copolymer is derivable from a monomer mixture comprising greater than or equal to 30 wt.% and less than or equal to 60 wt.% of one or more alkyl (meth)acrylate comonomers and greater than or equal to 40 wt.% and less than or equal to 70 wt.% of one or more optionally substituted styrene comonomers.

7. The fire protection composition according to any of the preceding claims, wherein the one or more alkyl (meth)acrylates comprises one or more C₁ to C₁₂ alkyl (meth)acrylates.

8. The fire protection composition according to any of the preceding claims, wherein the one or more optionally substituted styrene monomers are selected from one or more of unsubstituted styrene and C₁ to C₆ alkyl substituted styrene.

9. The fire protection composition according to any of the preceding claims, wherein the total amount of the polymeric compounds is 10 to 40 wt.-%, with reference to the total weight of the composition.

10. The fire protection composition according to any of the preceding claims, wherein the styrene-acrylate copolymer is present in an amount of greater than or equal to 3 wt.% and less than or equal to 15 wt.%.

11. The fire protection composition according to any of the preceding claims, wherein the ratio of the alkoxy-functional organic polymer to the styrene-acrylate copolymer is 0.1:1 to 10:1.

12. The fire protection composition according to any of the preceding claims, wherein the composition additionally comprises (C) a further filler.

13. The fire protection composition according to any of the preceding claims, wherein the composition additionally comprises (D) a further additive.

14. The fire protection composition according to any one of the preceding claims, wherein the composition is a fire-protection composition.

15. The fire protection composition according to any of the preceding claims, wherein the composition is a two-component composition with a first component and a second component.

16. The fire protection composition according to claim 15, wherein the first component contains alkoxy-functional organic polymer (a1) and the second component contains the styrene-acrylate copolymer (a2) and the intumescent composition (B).

17. The fire protection composition according to claim 16, wherein the first and/or the second component additionally contain the further filler (C) and/or the further additive (D).

## Patentansprüche

1. Brandschutzzusammensetzung für eine intumeszierende Beschichtung, umfassend:
(A) ein Bindemittelsystem, umfassend
(a1) ein alkoxyfunktionelles organisches Polymer, das eine alkoxyfunktionelle Silangruppeder allgemeinen Formel (I) terminiert und/oder als Seitengruppe entlang der Polymerkette enthält
-Si(R¹)ₘ(OR²)₃₋ₘ (I),
in der
R¹ eine lineare oder verzweigte C₁-C₁₆-Alkylgruppe darstellt,
R² eine lineare oder verzweigte C₁-C₆-Alkylgruppe darstellt, und
m eine ganze Zahl von 0 bis 2 ist; und
(a2) ein Styrol-Acrylat-Copolymer; und
(B) eine intumeszierende Zusammensetzung, umfassend eine Kombination aus einem Dehydrierungskatalysator, einem Treibmittel und einem Kohlenstofflieferanten.

2. Brandschutzzusammensetzung nach Anspruch 1, wobei das alkoxyfunktionelle organische Polymer (a1) ein Grundgerüst umfasst, das mindestens ein Mitglied ist, das aus der Gruppe ausgewählt ist, bestehend aus einer Alkylkette, einem Polyether, Polyester, Polyetherester, Polyamid, Polyurethan, Polyesterurethan, Polyetherurethan, Polyetheresterurethan, Polyamidurethan, Polyharnstoff, Polyamin, Polycarbonat, Polyvinylester, Polyacrylat, Polyolefin, Polyisobutylen, Polysulfid, Naturkautschuk, Neopren, Phenolharz, Epoxidharz und Melamin.

3. Brandschutzzusammensetzung nach Anspruch 2, wobei das Grundgerüst ein Polyether oder ein Polyurethan ist.

4. Brandschutzzusammensetzung nach einem der vorstehenden Ansprüche, wobei das alkoxysilanfunktionelle Polymer (a1) mindestens 2 alkoxyfunktionelle Silangruppen enthält.

5. Brandschutzzusammensetzung nach einem der vorstehenden Ansprüche, wobei das Styrol-Acrylat-Copolymer durch Polymerisation einer Monomermischung ableitbar ist, umfassend ein oder mehrere Alkyl(meth)acrylatmonomere und ein oder mehrere gegebenenfalls substituierte Styrol-Comonomere.

6. Brandschutzzusammensetzung nach einem der vorstehenden Ansprüche, wobei das Styrol-Acrylat-Copolymer aus einer Monomermischung ableitbar ist, umfassend mehr als oder gleich 30 Gew.-% und weniger als oder gleich 60 Gew.-% ein oder mehrere Alkyl(meth)acrylat-Comonomere und mehr als oder gleich 40 Gew.-% und weniger als oder gleich 70 Gew.-% ein oder mehrere gegebenenfalls substituierte Styrol-Comonomere.

7. Brandschutzzusammensetzung nach einem der vorstehenden Ansprüche, wobei das eine oder die mehreren Alkyl(meth)acrylate ein oder mehrere C₁- bis C₁₂-Alkyl(meth)acrylate umfassen.

8. Brandschutzzusammensetzung nach einem der vorstehenden Ansprüche, wobei die ein oder mehreren gegebenenfalls substituierten Styrolmonomere aus einem oder mehreren von unsubstituiertem Styrol und C₁- bis C₆-alkylsubstituiertem Styrol ausgewählt sind.

9. Brandschutzzusammensetzung nach einem der vorstehenden Ansprüche, wobei die Gesamtmenge der polymeren Verbindungen 10 bis 40 Gew.-% beträgt, bezogen auf das Gesamtgewicht der Zusammensetzung.

10. Brandschutzzusammensetzung nach einem der vorstehenden Ansprüche, wobei das Styrol-Acrylat-Copolymer in einer Menge von mehr als oder gleich 3 Gew.-% und weniger als oder gleich 15 Gew.-% vorhanden ist.

11. Brandschutzzusammensetzung nach einem der vorstehenden Ansprüche, wobei das Verhältnis des alkoxyfunktionellen organischen Polymers zu dem Styrol-Acrylat-Copolymer 0,1 : 1 bis 10 : 1 beträgt.

12. Brandschutzzusammensetzung nach einem der vorstehenden Ansprüche, wobei die Zusammensetzung zusätzlich (C) einen weiteren Füllstoff umfasst.

13. Brandschutzzusammensetzung nach einem der vorstehenden Ansprüche, wobei die Zusammensetzung zusätzlich (D) ein weiteres Additiv umfasst.

14. Brandschutzzusammensetzung nach einem der vorstehenden Ansprüche, wobei die Zusammensetzung eine Brandschutzzusammensetzung ist.

15. Brandschutzzusammensetzung nach einem der vorstehenden Ansprüche, wobei die Zusammensetzung eine Zweikomponentenzusammensetzung mit einer ersten Komponente und einer zweiten Komponente ist.

16. Brandschutzzusammensetzung nach Anspruch 15, wobei die erste Komponente alkoxyfunktionelles organisches Polymer (a1) und die zweite Komponente das Styrol-Acrylat-Copolymer (a2) und die intumeszierende Zusammensetzung (B) enthält.

17. Brandschutzzusammensetzung nach Anspruch 16, wobei die erste und/oder die zweite Komponente zusätzlich den weiteren Füllstoff (C) und/oder das weitere Additiv (D) enthaltet.

## Revendications

1. Composition de protection contre l'incendie pour un revêtement intumescent comprenant :
(A) un système de liant, comprenant
(a1) un polymère organique à fonctionnalité alcoxy, qui contient un groupe silane à fonctionnalité alcoxy ayant la formule générale (I), de terminaison et/ou en tant que groupe latéral le long de la chaîne polymère,
-Si(R¹)ₘ(OR²)₃₋ₘ (I),
dans laquelle
R¹ représente un groupe alkyle linéaire ou ramifié en C₁-C₁₆,
R² représente un groupe alkyle linéaire ou ramifié en C₁-C₆, et
m est un nombre entier allant de 0 à 2 ; et
(a2) un copolymère styrène-acrylate ; et
(B) une composition intumescente, comprenant une combinaison d'un catalyseur de déshydrogénation, d'un agent propulseur et d'un fournisseur de carbone.

2. Composition de protection contre l'incendie selon la revendication 1, dans laquelle le polymère organique à fonctionnalité alcoxy (a1) comprend un squelette de base, qui est au moins un élément choisi dans le groupe constitué d'une chaîne alkyle, un polyéther, polyester, ester de polyéther, polyamide, polyuréthane, polyester uréthane, polyéther uréthane, polyéther ester uréthane, polyamide uréthane, polyurée, polyamine, polycarbonate, polyester de vinyle, polyacrylate, polyoléfine, polyisobutylène, polysulfure, caoutchouc naturel, néoprène, résine phénolique, résine époxy, et mélamine.

3. Composition de protection contre l'incendie selon la revendication 2, dans laquelle le squelette de base est un polyéther ou un polyuréthane.

4. Composition de protection contre l'incendie selon l'une quelconque des revendications précédentes, dans laquelle le polymère à fonctionnalité alcoxysilane (a1) contient au moins 2 groupes silane à fonctionnalité alcoxy.

5. Composition de protection contre l'incendie selon l'une quelconque des revendications précédentes, dans laquelle le copolymère styrène-acrylate peut être dérive d'une polymérisation d'un mélange de monomères comprenant un ou plusieurs monomères de (méth)acrylate d'alkyle et un ou plusieurs comonomères de styrène facultativement substitués.

6. Composition de protection contre l'incendie selon l'une quelconque des revendications précédentes, dans laquelle le copolymère styrène-acrylate peut être dérivé d'un mélange de monomères comprenant 30 % en poids ou plus et 60 % en poids ou moins d'un ou plusieurs comonomères de (méth)acrylate d'alkyle et 40 % en poids ou plus et 70 % en poids ou moins d'un ou plusieurs comonomères de styrène facultativement substitués.

7. Composition de protection contre l'incendie selon l'une quelconque des revendications précédentes, dans laquelle le ou les (méth)acrylates d'alkyle comprennent un ou plusieurs (méth)acrylates d'alkyle en C₁ à C₁₂.

8. Composition de protection contre l'incendie selon l'une quelconque des revendications précédentes, dans laquelle le ou les monomères de styrène facultativement substitués sont choisis parmi un ou plusieurs de styrène non substitué et styrène substitué par alkyle en C₁ à C₆.

9. Composition de protection contre l'incendie selon l'une quelconque des revendications précédentes, dans laquelle la quantité totale des composés polymères est de 10 et 40 % en poids, par rapport au poids total de la composition.

10. Composition de protection contre l'incendie selon l'une quelconque des revendications précédentes, dans laquelle le copolymère styrène-acrylate est présent en une quantité de 3 % en poids ou plus et de 15 % en poids ou moins.

11. Composition de protection contre l'incendie selon l'une quelconque des revendications précédentes, dans laquelle le rapport entre le polymère organique à fonctionnalité alcoxy et le copolymère styrène-acrylate est de 0,1:1 à 10:1.

12. Composition de protection contre l'incendie selon l'une quelconque des revendications précédentes, dans laquelle la composition comprend en outre (C) une charge supplémentaire.

13. Composition de protection contre l'incendie selon l'une quelconque des revendications précédentes, dans laquelle la composition comprend en outre (D) un additif supplémentaire.

14. Composition de protection contre l'incendie selon l'une quelconque des revendications précédentes, dans laquelle la composition est une composition de protection contre l'incendie.

15. Composition de protection contre l'incendie selon l'une quelconque des revendications précédentes, dans laquelle la composition est une composition à deux composants avec un premier composant et un second composant.

16. Composition de protection contre l'incendie selon la revendication 15, dans laquelle le premier composant contient un polymère organique à fonctionnalité alcoxy (a1) et le second composant contient le copolymère styrène-acrylate (a2) et la composition intumescente (B).

17. Composition de protection contre l'incendie selon la revendication 16, dans laquelle le premier et/ou le second composant contiennent en outre la charge supplémentaire (C) et/ou l'additif supplémentaire (D).
